(19) **Europäisches Patentamt / European Patent Office / Office européen des brevets**

(11) **EP 1 381 132 B1**

(12) **EUROPEAN PATENT SPECIFICATION**

(45) Date of publication and mention
of the grant of the patent:
**08.09.2010 Bulletin 2010/36**

(51) Int Cl.:
*H02J 3/24* (2006.01)

(21) Application number: **02405576.6**

(22) Date of filing: **08.07.2002**

(54) **Power network parameter estimation**

Parameterschätzung für Energieversorgungsnetz

Estimation des paramètres pour réseau d'énergie

(84) Designated Contracting States:
**AT BE BG CH CY CZ DE DK EE ES FI FR GB GR IE IT LI LU MC NL PT SE SK TR**

(43) Date of publication of application:
**14.01.2004 Bulletin 2004/03**

(73) Proprietor: **ABB Research Ltd.**
**8050 Zürich (CH)**

(72) Inventors:
 • **Larsson, Mats**
  **5400 Baden (CH)**
 • **Rehtanz, Christian**
  **5405 Baden-Dättwil (CH)**
 • **Zima, Marek**
  **5400 Baden (CH)**

(74) Representative: **ABB Patent Attorneys**
**C/o ABB Schweiz AG**
**Intellectual Property (CH-LC/IP)**
**Brown Boveri Strasse 6**
**5400 Baden (CH)**

(56) References cited:
 • **ANDERSON P M ET AL: "AN ADAPTIVE METHOD FOR SETTING UNDERFREQUENCY LOAD SHEDDING RELAYS" IEEE TRANSACTIONS ON POWER SYSTEMS, IEEE INC. NEW YORK, US, vol. 7, no. 2, 1 May 1992 (1992-05-01), pages 647-655, XP000273072 ISSN: 0885-8950**
 • **LIU C-W ET AL: "Application of synchronised phasor measurements to real-time transient stability prediction" IEE PROCEEDINGS: GENERATION, TRANSMISSION AND DISTRIBUTION, INSTITUTION OF ELECTRICAL ENGINEERS, GB, vol. 142, no. 4, 1 July 1995 (1995-07-01), pages 355-60, XP006004157 ISSN: 1350-2360**
 • **WANG J-C ET AL: "DEVELOPMENT OF A FREQUENCY-DEPENDENT COMPOSITE LOAD MODEL USING THEMEASUREMENT APPROACH" IEEE TRANSACTIONS ON POWER SYSTEMS, IEEE INC. NEW YORK, US, vol. 9, no. 3, 1 August 1994 (1994-08-01), pages 1546-1556, XP000484885 ISSN: 0885-8950**
 • **REHTANZ C ET AL: "WIDE AREA MEASUREMENT AND PROTECTION SYSTEM FOR EMERGENCY VOLTAGE STABILITY CONTROL" 2002 IEEE POWER ENGINEERING SOCIETY. WINTER MEETING. CONFERENCE PROCEEDINGS. NEW YORK, NY, JAN. 27 - 31, 2002, IEEE POWER ENGINEERING SOCIETY, NEW YORK, NY: IEEE, US, vol. 2 OF 2, 27 January 2002 (2002-01-27), pages 842-847, XP001099677 ISBN: 0-7803-7322-7**

EP 1 381 132 B1

**Description**

*Field of the Invention*

The invention relates to the field of electric power transmission networks, and, more particularly, to a method, computer program and apparatus for the estimation of parameters of an electric power network.

*Background of the Invention*

An electric power transmission network or system comprises medium and high-voltage lines and substations for transforming voltages and for switching connections between lines. Loads and power generating plants are connected to the network. An important issue when controlling power generation and load flow is to keep the network frequency stable, i.e. to avoid over- or underfrequency conditions. Following severe disturbances, such as the outage of a large generation station or an interconnection to a neighbouring system, the average frequency will drop in the system. Unless the frequency drop is arrested before the frequency reaches 47-48 Hz in a 50 Hz system (or 57-58 Hz in a 60 Hz system), thermal units are tripped since their turbines will be damaged from prolonged underfrequency operation and a blackout is then highly likely. In these situations, it may therefore be necessary to disconnect load to preserve system integrity.

Underfrequency load shedding (UFLS) is the most widely used protection against frequency instability. Typically, load is shed based on a local frequency measurement in several steps of 5-20 % each. Typical threshold values are 57-58.5 Hz for 60 Hz systems or 48-48.5 Hz for a 50 Hz system. Usually there is also a time-delay intended for noise rejection. The drawbacks of this type of relays is their slow response, which is due to that they wait until the frequency is already low before ordering load shedding. As a result, too much load may be shed (over shedding) resulting in an overfrequency condition.

It is well known that a power mismatch $\Delta P$ following the outage of a generator or a tie-line can be calculated from an initial rate-of-change $d\omega/dt$ of the frequency and a system inertia constant $H_{system}$ according to the formula:

$$(1) \qquad \Delta P = 2H_{system} \frac{d\omega}{dt}$$

as is shown e.g. in P.M. Anderson and M. Mirheydar, "A low-order System Frequency Response Model", IEEE Transactions on Power Systems, vol. 5, no. 3, 1990. This value $\Delta P$ can be used as an indication of the amount of load that has to be shed to arrest further frequency decline. Several proposals for UFLS relays based on local measurements exist. Such relays avoid the slow response of the conventional relays, however, since they lack coordination among the relays, they are difficult to tune in such a way that over shedding is avoided. A further drawback of both types of relays is that their tuning depends on off-line assumptions of the loads' response to frequency deviations and the remaining system inertia. Since these vary from disturbance to disturbance, the relays have to be tuned for the worst-case scenario and may therefore take excessive control actions, also resulting in overfrequency.

V.V. Terzija, H.-J. Koglin, "New Approach of Adaptive Automatic Load Shedding", ETEP Vol. 11, No., 5, Sept/Oct 2001, proposes to determine the frequency and its rate of change by a non-recursive Newton type algorithm using measurements of frequency in various locations and inertia constants of the connected generators to determine an average system frequency.

**Description of the Invention**

It is an object of the invention to create a method, computer program and apparatus for the estimation of parameters of an electric power network of the type mentioned initially, which improve an estimation of currently valid operating parameters of the network.

These objects are achieved by a method, computer program and apparatus for the estimation of parameters of an electric power network according to the claims 1, 8 and 9.

The inventive method for estimating parameters of an electric power network comprises the steps of:

- repeatedly measuring, at a plurality of network locations, synchronous values of electrical network variables;
- identifying, during network operation, currently valid parameters of a mathematical model of the power network; characterized in that

computing, from the mathematical network model having currently valid parameters, an amount of power for corrective load shedding fleat thifts a predicted network frequency towards nominal network frequency.

wherein

- the measured variables are frequency, power absorbed by each of a plurality of observed loads, and a total active power loss; and
- the parameters identified comprise currently valid load parameters, representing a dependency of a load on frequency and voltage.

This allows estimating load characteristics on-line during network operation. It therefore is possible to account for an inherent variation of the load characteristics with respect to voltage and frequency variations. This improves the precision of the estimate and the reliability of further actions and calculations based on the estimated state.

In a preferred variant of the invention, the model incorporates an effect of sensitivity coefficients that specify, for each load, a dependency of voltage change on real and reactive power consumed. This further improves the accuracy of the model and of the estimated parameters.

In a further preferred variant of the invention, parameters of a linear state-space representation of the dynamics of the network are computed, the state-space representation comprising a term representing uncontrolled disturbances of power generation or consumption. This allows to model the effect of such disturbances on the linear model states explicitly, and either to estimate unknown disturbances online or to incorporate measured disturbances in the model, improving the estimate of other variables and/or parameters.

In a further preferred variant of the invention, the method comprises the step of computing, from the mathematical network model having the currently valid parameters, a frequency stability indicator as a predicted steady state frequency $y^*$ of the network. This allows to determine whether the predicted steady state frequency $y^*$ is acceptable or not, and how far the predicted steady state frequency $y^*$ exceeds acceptable limits.

In a further preferred variant of the invention, the method comprises the step of computing, from the mathematical network model having the currently valid parameters, an amount of power for corrective load shedding that shifts the predicted network frequency towards a target frequency that is closer to the nominal network frequency. This allows initiating protective action by shedding approximately said amount of power at one or more locations in the network.

The computer program for the estimation of parameters of an electric power network according to the invention is loadable into an internal memory of a digital computer, and comprises computer program code means to make, when said computer program code means is loaded in the computer, the computer executes the method according to the invention. In a preferred embodiment of the invention, a computer program product comprises a computer readable medium, having the computer program code means recorded thereon.

The apparatus for the estimation of parameters of an electric power network according to the invention comprises a data processor, a memory coupled to the processor and computer program code means stored in said memory, where said computer program code means, when executed by the processor, causes the method according to the invention to be executed.

Further preferred embodiments are evident from the dependent patent claims.

**Brief Description of the Drawings**

The subject matter of the invention will be explained in more detail in the following text with reference to preferred exemplary embodiments, which are illustrated in the attached drawings, in which:

Figure 1   schematically shows a part of an electric power network;
Figure 2   shows a time history of network frequency following the loss of a generator;
Figure 3   shows a time history of actual frequency and estimated steady state frequency;
Figure 4   shows a time history of a steady-state frequency prediction error;
Figure 5   shows a time history of actual frequency and estimated steady state frequency after a generator loss and subsequent corrective load shedding; and
Figure 6   shows a time history of network frequency following three plant trips, using conventional local underfrequency load shedding relays (UFLS) and the method according to the invention.

The reference symbols used in the drawings, and their meanings, are listed in summary form in the list of reference symbols. In principle, identical parts are provided with the same reference symbols in the figures.

**Detailed Description of Preferred Embodiments**

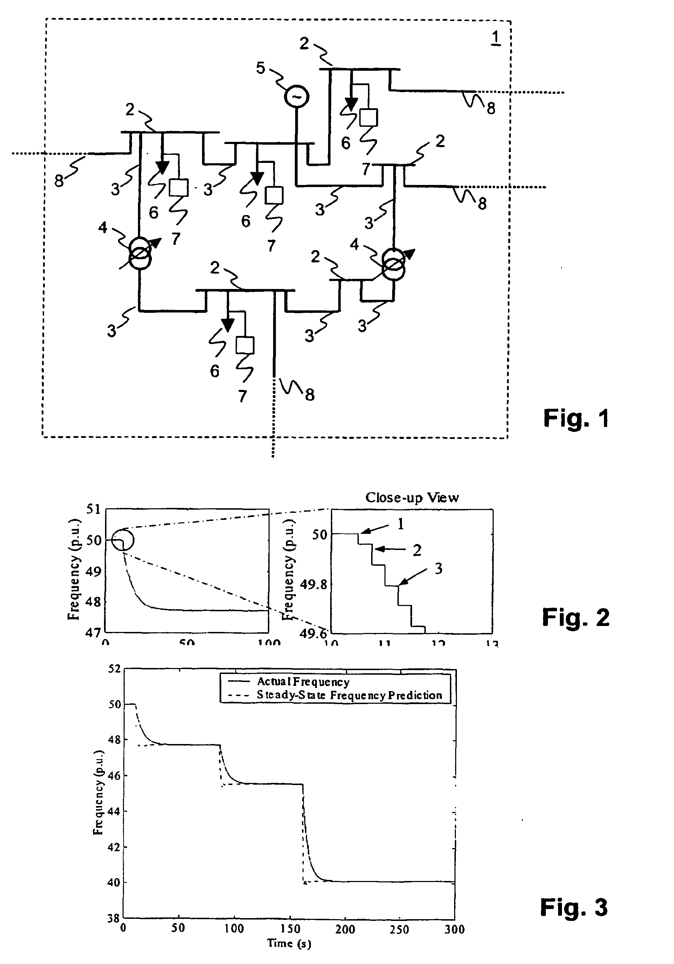

Figure 1 schematically shows a part 1 of an electric power network. Buses 2 are connected by lines 3 which may comprise under load tap changers (ULTC) 4. An under load tap changer is a transformer whose voltage ratio may be switched in discrete steps. Also connected to buses 2 are generators 5 such as single generators or complete power plants and loads 6. Loads 6 are consumers of power or other networks, e.g. at a lower voltage level. Each load 6 is connected to the network by a load connection, which is, for example a feeder leading to a power consumer. When the section of electric power network under consideration is a high voltage transmission network, the feeder may lead to a high of medium voltage distribution network. At least one phasor measurement unit 7 is connected to a bus 2 or to a feeder. Interface lines 8 lead to neighbouring networks.

The phasor measurement unit 7 measures phasors of voltage at and current through an electric connection such as a feeder or line or busbar. The phasor data represents a phasor and may be a polar number, the absolute value of which corresponds to either the real magnitude or the RMS value of a quantity, and the phase argument to the phase angle at zero time. Alternatively, the phasor may be a complex number having real and imaginary parts or the phasor may use rectangular or exponential notation. Phasors may be used to represent quantities such as the voltage, current, power or energy associated with a phase conductor or an electronic circuit. By contrast, conventional sensing devices used in power networks generally measure only scalar, average representations, such as the RMS value of a voltage, current etc. In a three-phase power system whose phases are in a balanced state, phasors from all three phases may be represented by a single common phasor.

The phasor measurement units 7 are used for three reasons. First, the measurements are taken with short time intervals of approximately 20 to 100 milliseconds. This gives a view on the system with a high resolution over time. Second, the provided phasor information requires an installation of phasor measurement units 7 at only about each third or forth station or bus for an area that is to be observed. Third, synchronized time-triggered and time-stamped measurements from the entirety of phasor measurement units 7 together form a dynamic snapshot of the system state. The first reason is related to the parameter determination of the load parameter, the second and third reasons are related to the dynamic observation of the critical area and the determination of the equilibrium of the system model.

The method avoids the drawbacks of the conventional relays by basing control on on-line measurements of the required signals instead of conservative off-line assumptions. These on-line measurements should be provided by a wide-area measurement system comprising the PMU's and with an update frequency of at least 4 Hz, although higher update frequency will result in better performance. A single-machine equivalent model is formed online and used for the monitoring and control of frequency stability.

Such a wide area measurement system is described in Rehtanz et.al. "System for Wide Area Control, Protection and Optimization based on Phasor Measurements", Proceedings "Power systems and communications systems infrastructure for the future", Beijing, September 2002, which hereby is incorporated in its entirety by reference.

From PMU measurements, the wide area measurement system determines the following values:

- Active and reactive power output of connected generators.
- Voltage at a plurality of buses of the power system. Not all buses must be provided with PMUs, for example, half the buses of a network might be equipped with PMUs.
- Active and reactive power drawn by a plurality of loads; where at least the loads that are to be used for load shedding are observed.
- The total of losses in the power system.

In addition, the wide area measurement system may store the inertia constant of each generator as supplied by an operator of the generator, or estimate the inertia from measurements made during operation.

The method is based on a single generator model of each island as proposed by the paper by Anderson and Mirheydar cited in the introduction. In order to simplify the explanation, the effect of governors shall first be neglected. This is a conservative assumption. The frequency dynamics are then determined by the differential equation

$$(2) \qquad \frac{d\omega_{avg}}{dt} = \frac{1}{2H_{system}}(P_m - P_e),$$

where

$$(3) \qquad H_{system} = \sum_{i=1..N} H_i, \qquad P_m = \sum_{i=1..N} P_{m,i}, \qquad P_e = P_{loss} + \sum_{i=1..M} P_{l,i}$$

for an island with $N$ generators, $M$ load buses and active power losses $P_{loss}$. $H_{system}$ denotes a network inertia constant, made up of individual generator inertia constants $H_i$. $P_m$ is the total mechanical power delivered to the generator shafts by the turbines, $P_{l,i}$ is the electrical power drawn by the $i$-th load, and $P_e$ is the total electrical load on the generators. Immediately before a loss of generation, equation (2) is in an equilibrium state, and $P_m$ equals $P_e$. If generator governor action is neglected, then $P_m$ can be assumed to remain constant during a short time after an underfrequency condition occurs.

Each controllable load is modelled using a linearised static form:

$$(4) \qquad P_{l,i}(V_i, \omega_i) = (1 - k_i)P_0(1 + a_i(V_i - V_{0,i}) + c_i(\omega_{avg} - \omega_s))$$

$$(5) \qquad Q_{l,i}(V_i, \omega_i) = (1 - k_i)Q_0(1 + b_i(V_i - V_{0,i}) + d_i(\omega_{avg} - \omega_s))$$

where $k_i$ with $0 \leq k_i \leq 1$ is a constant for modelling load shedding, $V_{0,i}$ is a nominal voltage at bus $i$, and $\omega_s$ is the synchronous frequency. The parameters $a_i$, $b_i$, $c_i$ and $d_i$ in this load model represent the load characteristics and are estimated on-line. Linearising the load model and writing in matrix form yields:

$$(6) \qquad \Delta P_L = A\Delta V + C\Delta\omega_{avg} + G\Delta k$$

$$(7) \qquad \Delta Q_L = B\Delta V + D\Delta\omega_{avg} + H\Delta k$$

In order to account for the effect of voltage variations, the model proposed by Anderson and Mirheydar is, in a preferred embodiment of the invention augmented with matrices of sensitivity coefficients incorporating, for each load, a dependency of voltage change on real and reactive power consumed by the load:

$$(8) \qquad \Delta V = E\Delta P_L \quad \text{and} \quad \Delta V = F\Delta Q_L$$

The sensitivity coefficient matrices $E$ and $F$ are determined from data obtained by the wide area measurement system. In a preferred embodiment of the invention, they are continuously updated, e.g. every 200 milliseconds. The above equations essentially correspond to a linearised representation of the network. Combining eqs. (2)-(8) to eliminate the variables $\Delta V$, $\Delta P_L$ and $\Delta Q_L$, the model can be written in the ordinary differential equation (ODE) form:

$$(9) \qquad \frac{d\Delta x}{dt} = A_{ode}\Delta x + B_{ode}\Delta k + E_{ode}\Delta p$$

$$(10) \qquad \Delta y = C_{ode}\Delta x$$

where $x$ is the dynamic state vector. In this application the only dynamic state is the average frequency $\omega_{avg}$. $x$ is thus a scalar, and $C_{ode}$ is equal to one. In a preferred embodiment of the invention, x is a vector, representing the frequency at different locations in the network. In a further preferred embodiment of the invention, $x$ includes states used to model generator governor and/or measurement filter dynamics. In this case, $C_{ode}$ is configured such that the output vector $\Delta y$ represents frequency $\omega$ alone. $\Delta k$ is an external control input representing load shedding, and $\Delta p$ is a disturbance input, representing for example generator trippings or uncoordinated load shedding. Note that all equations are written on incremental form, relative to the operating point. That is, $\Delta x = x-x_0$, $\Delta y=y-y_0$, $\Delta k=k-k_0$ etc., where $x_0, y_0, k_0$ etc. correspond to the value of the variables at the start of the present sampling interval. By the formulation of the model (9)-(10) in incremental form, a natural integrator is inserted in the control loop, and the control becomes robust to modelling errors. The ODE form is used for the determination of controls.

Measured variables are the total active power loss $P_{loss}$ throughout the network, the power absorbed by each of the observed loads $P_{l,i}$ and frequency measurements throughout the network. From these frequency measurements, the average frequency $\omega_{avg}$ is computed, e.g. according to the method described in the abovementioned paper by Terzija et al. The change in $\omega_{avg}$ is equal to $\Delta x$.

The measured variables are incorporated in equations (9)-(10), $\Delta P_L$ and $\Delta Q_L$ are eliminated, and the remaining parameters $\Delta p, a_i, b_i, c_i, d_i$ are estimated. The estimated variables are determined by an estimation procedure described below, and subsequently the matrices $A_{ode}, B_{ode}, C_{ode}, E_{ode}$ are computed from these estimated variables.

Figure 2 shows a typical trajectory of network frequency over time following the loss of a generator. The parameters $a_i$, $b_i$, $c_i$ and $d_i$ in the load model of equations (6)-(7) can be determined from measurements taken at least three samples under different network conditions. The system triggers when the system average frequency deviation is greater than 0.1 Hz or a frequency derivative greater than 0.3 Hz/s, either positive or negative. The last sample before the triggering condition is met becomes measurement point 1, the point when the condition is first violated becomes point 2. Point 3 is taken when the frequency deviation is large enough to estimate the load frequency deviation. In the simulations in this paper, a limit of $\pm 0.2$ Hz has been used. For later instances in time, network parameters are determined, in a preferred embodiment of the invention, through a least squares estimator that uses all available or a predetermined maximum number of measurement points.

The frequency stability is determined in the following way: The current power mismatch in the system is calculated as

$$(11) \qquad \Delta p = 2H_{system} \frac{d\omega_{avg}}{dt}$$

This power mismatch will change due to load frequency and voltage sensitivity as well as applied control actions. The quantity $d\omega_{avg}/dt$ is a measurement signal and the network inertia $H_{system}$ is supplied by the wide area measurement system enabling us to estimate the power mismatch using Eq. (2).

The calculated power mismatch thus corresponds to the amount of generation or load lost only at the instant of disconnection, i.e., measurement point 1. Using the power mismatch, the predicted steady-state frequency $y^*$ is calculated from equations (9)-(10) by setting the derivative to zero and solving for $\Delta y^*$, yielding

$$(12) \qquad \Delta y^* = C_{ode} A_{ode}^{-1} (B_{ode}\Delta k + E_{ode}\Delta p)$$

At this stage, it is assumed that no load shedding control is made, i.e., $\Delta k = 0$, so the predicted steady-state output can be written as

$$(13) \qquad \Delta y^* = C_{ode} A_{ode}^{-1} E_{ode}\Delta p$$

and the actual output can be written

$$(14) \qquad y^* = y_0 + \Delta y^*$$

The steady-state frequency value calculated using (14) can be used as frequency stability indicator - if the steady-state frequency is unacceptable, corrective controls such as load shedding has to be applied.

Figure 3 illustrates the accuracy of the estimated minimum frequency without load shedding for a case with sequential tripping of generators G3 at 10.1 s, G4 at 85.2 s and G5 at 160 s. This corresponds to about one third of the pre-disturbance generation. Note that the last tripping is a very large disturbance that is here used mainly to illustrate that there is some inexactness in the method due to the assumption that the network is linear made in equations (8). The method accurately predicts the final frequency in 1-2 seconds, however this time is highly dependent on the filtering time constant used for the frequency derivative measurement. Quicker convergence can be achieved but this results in oscillations in the steady-state frequency prediction.

Note that there is a delay before ordered controls are carried out and their effect can be noticed in the measurements from the power system. There are several sources of this delay: for example the communication delay to the substation where the control is carried out, the actual time it takes to apply the control, the communication delay of the next set of measurements and the time constant of the filter on the measurement signal. During this time, the steady-state frequency estimates provided by (15) and (16) are unreliable.

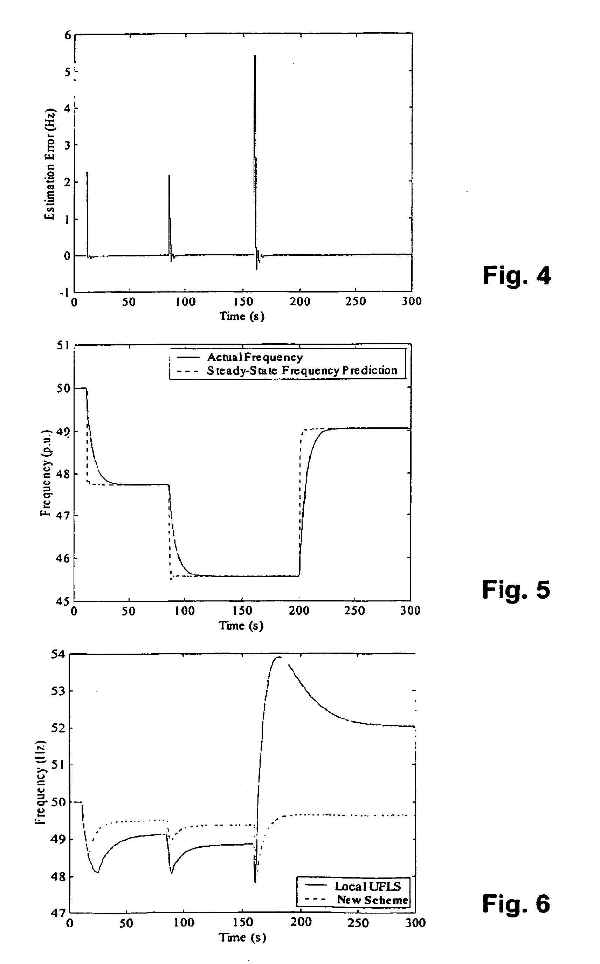

Figure 4 shows the steady-state frequency prediction error. We can see a sharp increase in the prediction error for the first few samples after each trip. This is due to a one-sample time delay before the plant trips are noticed and subsequently to the time it takes for the frequency derivative estimate to converge. Following this initial spike, there is then a slower transient due to the errors introduced by the linearisation of the network equations. As the frequency approaches its steady-state value this error component also converges to zero.

Corrective control is effected by either shedding a certain amount of load power, and/or by injecting a certain amount of power into the network. The required amount of power is determined in the following fashion:

Assume that a certain steady-state frequency $y^* = y_0 + \Delta y^*$ has been calculated using equation (16) and that this predicted frequency is unacceptable. In order to simply calculate the amount of load to shed we can set $B_{ode} = 1/(2H_{system})$, thus assuming that load is shed in a single point. The power step that needs to be applied to keep the steady-state frequency estimate at a certain target value $\overset{\bullet}{y}_{ref}$ can then be determined by inserting the target value in equation (12), noting from (2)-(9) that $\Delta P = B_{ode}k_i$ and solving for $\Delta P$:

$$(18) \qquad \Delta P = -\frac{\Delta \overset{\bullet}{y}_{ref} + C_{ode}A_{ode}^{-1}E_{ode}\Delta p}{C_{ode}A_{ode}^{-1}B_{ode}}$$

where

$$\Delta \overset{\bullet}{y}_{ref} = \overset{\bullet}{y}_{ref} - y_0.$$

In a preferred embodiment of the invention, the load is not shed in a single point, and individual loads to be shed are selected in order to approximate $\Delta P$ as well as possible, according to the following algorithm:

    1. Calculate the amount of load required for shedding using equation (18).
    2. Find loads with available steps, and calculate their actual step size, that is, taking the actual load on the feeders into account.
    3. Allocate one step of load shedding at the load with the step size closest to the remaining amount to shed.
    4. Repeat step 3 until at least the amount of load calculated in step 1 has been shed.

In another preferred embodiment of the invention, loads that are relatively remote from the generators are shed preferably.

Figure 5 shows the time history of network frequency following disconnection of the two units G3 and G4. At time 200 s, equation (18) suggest that 2.97 p.u. of active load needs to be shed to restore the frequency to 49 Hz. This amount of active power is injected at bus 8 and the frequency is restored. The figure shows that the amount calculated is accurate.

In a practical power system, the required power step can be achieved not only by load shedding, but also other means such as emergency power from gas turbine power plants, short-term storage devices, and over high voltage direct current (HVDC) links. The method is also applicable to the case of a generation-rich island, where an overfrequency condition may occur. In such a condition, the method determines reductions in generation instead of load. Such control may be effected, for example, by generation tripping or by fast-valving.

To illustrate the performance of the inventive method as compared to a conventional scheme using local underfrequency load shedding relays, simulation results from simulations of a test power system are shown in Figure 6. The frequency response following the disconnection the three units, at 10, 86 and 160 seconds, respectively. We see that when the two small units are tripped at 10 and 86 s, respectively, the proposed scheme acts faster than the local UFLS. On the other hand, the proposed method applies stabilizing actions as soon as they can be accurately calculated and the frequency decline is therefore arrested earlier. Another observation that can be made is that the reaction time, and thereby the frequency decline, is slightly smaller at the second trip since no time is spent estimating the load parameters. When the large unit is tripped, the frequency decline is actually larger with the proposed method than with the local scheme because of the time-delays introduced by communication and centralized calculation. However, the local scheme uses too much shedding and a considerable frequency overshoot is present.

List of designations

1    section of electric power network
2    bus
3    line
4    ULTC (under load tap changer)
5    generator
6    load
7    phasor measurement unit
8    interface line

**Claims**

1. A method for the estimation of parameters of an electric power network, comprising the steps of:

> • measuring, repeatedly and synchronously, at a plurality of network locations, values of electrical network variables; and
> • identifying, during network operation, currently valid parameters of a mathematical model of the power network;
> **characterized in that** the method comprises
> • computing, from the mathematical network model having the currently valid parameters, an amount of power for corrective load shedding that shifts a predicted network frequency towards a nominal network frequency, wherein
> • the measured variables are frequency $\omega$, power absorbed by each of a plurality of observed loads $P_{l,i}$, and a total active power loss $P_{loss}$ ; and
> • the parameters identified comprise currently valid load parameters $a_i, b_i, c_i, d_i$ , representing a dependency of a load on frequency and voltage.

2. Method according to claim 1, wherein the model incorporates an effect of sensitivity coefficients $E, F$ that specify, for each load, a dependency of voltage change on real and reactive power consumed.

3. Method according to claim 1 or 2, wherein parameters of a linear state-space representation $A_{ode}, B_{ode}, C_{ode}, E_{ode}$ of the dynamics of the network are computed, the state-space representation being

$$\frac{d\Delta x}{dt} = A_{ode}\Delta x + B_{ode}\Delta k + E_{ode}\Delta p$$

$$\Delta y = C_{ode}\Delta x$$

and comprising a term $E_{ode}\Delta p$ for uncontrolled disturbances of power generation or consumption, and where a state

vector $\Delta x$ and an output $\Delta y$ of the state-space representation comprise at least one or more network frequencies.

4. Method according to one of the preceding claims, comprising the step of

- computing, from the mathematical network model having the currently valid parameters, a frequency stability indicator as the predicted steady state frequency $y^*$ of the network.

5. Method according to claim 4 and claim 3, wherein the predicted steady state frequency $y^*$ is computed as

$$y^* = y_0 + \Delta y^*$$

where

$$\Delta y^* = C_{ode} A_{ode}^{-1} E_{ode} \Delta d$$

and where $y_0$ is a reference operating point and $\Delta y^*$ is a difference relative to this operating point.

6. Method according to claim 3, wherein the amount of power for corrective load shedding is computed as

$$\Delta P = -\frac{\Delta y_{ref}^* + C_{ode} A_{ode}^{-1} E_{ode} \Delta d}{C_{ode} A_{ode}^{-1} B_{ode}}$$

where $y_0$ is a reference operating point and $\Delta y_{ref}^* = y_{ref}^* - y_0$ is a target post shedding frequency that needs to be attained.

7. Computer program for the estimation of parameters of an electric power network which is loadable and executable on a data processing unit and which computer program, when being executed, performs the steps according to one of the preceding claims.

8. Apparatus for the estimation of parameters of an electric power network, comprising a data processor, a memory coupled to the processor and computer program code means stored in said memory, where said computer program code means, when executed by the processor, performs the steps according to one of claims 1 to 6.

**Patentansprüche**

1. Verfahren für die Schätzung von Parametern eines Stromversorgungsnetzes, umfassend die folgenden Schritte:

- wiederholtes und synchrones Messen von Werten von Stromnetzvariablen an mehreren Netzorten; und
- Identifizieren von gegenwärtig gültigen Parametern eines mathematischen Modells des Stromversorgungsnetzes während des Netzbetriebs;
**dadurch gekennzeichnet, daß** das Verfahren folgendes umfaßt:
- Berechnen einer Leistungsmenge für einen korrigierenden Lastabwurf, der eine vorhergesagte Netzfrequenz zu einer nominellen Netzfrequenz verschiebt, aus dem mathematischen Netzmodell mit den gegenwärtig gültigen Parametern, wobei
- die gemessenen Variablen Frequenz $\omega$, von jeder der beobachteten Lasten absorbierte Leistung $P_{l,i}$ und ein gesamter aktiver Leistungsverlust $P_{loss}$ sind; und
- die identifizierten Parameter gegenwärtig gültige Lastparameter $a_i, b_i, c_i, d_i$ umfassen, die eine Abhängigkeit einer Last von Frequenz und Spannung darstellen.

**2.** Verfahren nach Anspruch 1, wobei das Modell einen Effekt von Sensibilitätskoeffizienten *E, F* beinhaltet, die für jede Last eine Abhängigkeit der Spannungsänderung von der verbrauchten Wirk- und Blindleistung spezifizieren.

**3.** Verfahren nach Anspruch 1 oder 2, wobei Parameter einer linearen Zustandsraumdarstellung $A_{ode}$, $B_{ode}$, $C_{ode}$, $E_{ode}$ der Dynamik des Netzes berechnet werden, wobei die Zustandsraumdarstellung wie folgt lautet

$$\frac{d\Delta x}{dt} = A_{ode}\Delta x + B_{ode}\Delta k + E_{ode}\Delta p$$

$$\Delta y = C_{ode}\Delta x$$

und einen Term $E_{ode}\Delta p$ für unkontrollierte Störungen der Stromerzeugung oder des Stromverbrauchs umfassen und wobei ein Zustandsvektor $\Delta x$ und eine Ausgabe $\Delta y$ der Zustandsraumdarstellung mindestens eine oder mehrere Netzfrequenzen umfassen.

**4.** Verfahren nach einem der vorhergehenden Ansprüche, umfassend den folgenden Schritt:

• Berechnen eines Frequenzstabilitätsindikators als vorhergesagte eingeschwungene Frequenz $y^*$ des Netzes aus dem mathematischen Netzmodell mit den gegenwärtig gültigen Parametern.

**5.** Verfahren nach Anspruch 4 und Anspruch 3, wobei die vorhergesagte eingeschwungene Frequenz $y^*$ berechnet wird als

$$y^* = y_0 + \Delta y^*$$

wobei

$$\Delta y^* = C_{ode}A_{ode}^{-1}E_{ode}\ \Delta d$$

und wobei $y_0$ ein Referenzarbeitspunkt ist und $\Delta y^*$ eine Differenz relativ zu diesem Arbeitspunkt ist.

**6.** Verfahren nach Anspruch 3, wobei die Strommenge für einen korrigierenden Lastabwurf berechnet wird als

$$\Delta P = -\frac{\Delta y^*_{ref} + C_{ode}A_{ode}^{-1}E_{ode}\Delta d}{C_{ode}A_{ode}^{-1}B_{ode}}$$

wobei $y_0$ ein Referenzarbeitspunkt ist und $\Delta y^*_{ref} = y^*_{ref} - y_0$ eine Ziel-nach-Abwurffrequenz ist, die erreicht werden muß.

**7.** Computerprogramm für die Schätzung von Parametern eines Stromversorgungsnetzes, das geladen und auf einer Datenverarbeitungseinheit ausgeführt werden kann, und wobei das Computerprogramm bei Ausführung die Schritte gemäß einem der vorhergehenden Ansprüche ausführt.

**8.** Vorrichtung für die Schätzung von Parametern eines Stromversorgungsnetzes, umfassend einen Datenprozessor, einen an den Prozessor gekoppelten Speicher und ein in dem Speicher gespeichertes Computerprogrammcodemittel, wobei das Computerprogrammcodemittel bei Ausführung durch den Prozessor die Schritte gemäß einem der Ansprüche 1 bis 6 ausführt.

**Revendications**

1. Procédé d'estimation de paramètres d'un réseau de puissance électrique, comprenant les étapes suivantes :

   - mesure répétée et synchrone, à une pluralité d'emplacements réseau, de valeurs de variables de réseau électriques ; et
   - identification, durant le fonctionnement du réseau, de paramètres courants valables d'un modèle mathématique du réseau de puissance ;

   **caractérisé en ce que** le procédé comprend :

   - le calcul, à partir du modèle de réseau mathématique aux paramètres courants valables, d'une quantité de puissance pour un délestage correcteur qui déplace une fréquence de réseau prédite vers une fréquence de réseau nominale, dans lequel
   - les variables mesurées sont la fréquence $\omega$, la puissance absorbée par chacune d'une pluralité de charges observées $P_{l,i}$, et une perte de puissance active totale $P_{perte}$ ; et
   - les paramètres identifiés comprennent des paramètres de charge courants valables $a_i$, $b_i$, $c_i$, $d_i$, représentant une dépendance d'une charge vis à vis de la fréquence et de la tension.

2. Procédé selon la revendication 1, dans lequel le modèle incorpore un effet de coefficients de sensibilité $E$, $F$ qui spécifient, pour chaque charge, une dépendance du changement de tension vis à vis de la puissance réelle et réactive consommée.

3. Procédé selon la revendication 1 ou 2, dans lequel les paramètres d'une représentation état-espace linéaire, $A_{ode}$, $B_{ode}$, $C_{ode}$, $E_{ode}$ de la dynamique du réseau sont calculés, la représentation état-espace étant

$$\frac{d\Delta x}{dt} = A_{ode}\Delta x + B_{ode}\Delta k + E_{ode}\Delta p$$

$$\Delta y = C_{ode}\Delta x$$

   et comprenant un terme $E_{ode}\Delta p$ de perturbations non contrôlées de génération ou consommation de puissance, et où un vecteur d'état $\Delta x$ et une sortie $\Delta y$ de la représentation état-espace comprennent au moins une ou plusieurs fréquences de réseau.

4. Procédé selon l'une des revendications précédentes, comprenant l'étape de

   - calcul, à partir du modèle de réseau mathématique aux paramètres courants valables, d'un indicateur de stabilité de fréquence comme fréquence prédite de régime permanent $y^*$ du réseau.

5. Procédé selon la revendication 4 ou la revendication 3, dans lequel la fréquence prédite de régime permanent $y^*$ est calculée sous la forme

$$y^* = y_0 + \Delta y^*$$

   où

$$\Delta y^* = C_{ode} A_{ode}^{-1} E_{ode} \Delta d$$

et où $y_0$ est un point opérationnel de référence et $\Delta y^*$ est une différence relative à ce point opérationnel.

**6.** Procédé selon la revendication 3, dans lequel la quantité de puissance pour un délestage de charge correcteur est calculée sous la forme

$$\Delta P = -\frac{\Delta y_{ref}^* + C_{ode} A_{ode}^{-1} E_{ode} \Delta d}{C_{ode} A_{ode}^{-1} B_{ode}}$$

où $y_0$ est un point opérationnel de référence et $\Delta y^*_{ref} = y^*_{ref} - y_0$ est une fréquence de délestage de poste cible à obtenir.

**7.** Programme informatique d'estimation de paramètres d'un réseau de puissance électrique, chargeable et exécutable sur une unité de traitement de données et qui, lorsqu'il est exécuté, effectue les étapes selon l'une des revendications précédentes.

**8.** Processeur d'estimation de paramètres d'un réseau de puissance électrique, comprenant un processeur de données, une mémoire couplée au processeur et un moyen de code de programme informatique mémorisé dans la mémoire, ledit moyen de code de programme informatique, lorsqu'il est exécuté par le processeur, effectuant les étapes selon l'une des revendications 1 à 6.

**Fig. 1**

**Fig. 2**

**Fig. 3**

**Fig. 4**

**Fig. 5**

**Fig. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P.M. Anderson ; M. Mirheydar.** A low-order System Frequency Response Model. *IEEE Transactions on Power Systems,* 1990, vol. 5 (3
- **V.V. Terzija ; H.-J. Koglin.** New Approach of Adaptive Automatic Load Shedding. *ETEP,* September 2001, vol. 11 (5
- **Rehtanz.** System for Wide Area Control, Protection and Optimization based on Phasor Measurements. *Proceedings ''Power systems and communications systems infrastructure for the future'',* September 2002